(19) Europäisches Patentamt / European Patent Office / Office européen des brevets

(11) **EP 4 209 807 A1**

(12) **EUROPEAN PATENT APPLICATION**
published in accordance with Art. 153(4) EPC

(43) Date of publication:
**12.07.2023  Bulletin 2023/28**

(51) International Patent Classification (IPC):
**G01S 17/894** (2020.01)   **G01S 17/931** (2020.01)
**G01S 7/48** (2006.01)      **G05D 1/02** (2020.01)

(21) Application number: **22800994.0**

(22) Date of filing: **08.04.2022**

(86) International application number:
**PCT/KR2022/005161**

(87) International publication number:
**WO 2023/096037 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.11.2021  KR 20210162520**

(71) Applicant: **Morai**
**Seongnam-si, Gyeonggi-do, 13449 (KR)**

(72) Inventors:
• **JUNG, Jiwon**
  **Seoul 06168 (KR)**
• **HONG, Jun**
  **Seoul 06168 (KR)**
• **LEE, Sugwan**
  **Seoul 06168 (KR)**

(74) Representative: **Studio Torta S.p.A.**
**Via Viotti, 9**
**10121 Torino (IT)**

(54) **DEVICE FOR GENERATING REAL-TIME LIDAR DATA IN VIRTUAL ENVIRONMENT AND CONTROL METHOD THEREOF**

(57)   Provided is a technology for providing a virtual environment for testing an autonomous vehicle driving, in which an apparatus for generating virtual LiDAR data in a virtual environment includes a LiDAR data collection unit installed in a moving means driving in a real environment to collect LiDAR data, a database configured to store the collected LiDAR data, a virtual environment build engine configured to build a virtual environment, and a LiDAR data generation unit configured to generate virtual LiDAR data corresponding to a movement of a virtual moving means in the built virtual environment.

Fig. 1

EP 4 209 807 A1

**Description**

**TECHNICAL FIELD**

The present disclosure relates to an apparatus for generating virtual LiDAR data and a method for controlling the same, and more specifically, to an apparatus for generating virtual LiDAR data according to movements of a virtual moving means driving in a virtual environment, and a method for controlling the same.

**BACKGROUND**

In general, while a vehicle is driving, an autonomous driving system can automatically control the driving of the vehicle from a starting point to an ending point on a road using road map information, GPS location information, and signals acquired from various sensors.

In order to respond to various unexpected situations, the autonomous driving system measures in real time the surrounding objects while driving, and if a variable occurs, adjusts the vehicle control according to the variable. That is, a separate change is made to the control to avoid the risk factor.

To this end, the autonomous driving system is configured to perform autonomous driving of the vehicle according to the flow of operations including recognition, determination, and control, and for the recognition operation, recognize the driving environment such as the presence of other vehicles, pedestrians, obstacles, and the like on the road using sensors such as RADAR, LiDAR, camera, and the like mounted on the vehicle. For the determination operation, the autonomous driving system is configured to infer the driving condition based on the data and map information measured in the recognition operation, and for the control operation, cause the actual manipulation to be performed by generating control signals for the components of the vehicle based on the values calculated and inferred in the determination operation.

For these operations, the autonomous vehicles are developed in such a way that achieves more appropriate control by recognizing and determining more information in detail. To this end, in the related art, the algorithms of each stage have been developed so as to derive accurate determinations from many variables.

Meanwhile, various driving apparatuses and systems loaded with the algorithms developed as described above may be mounted to the vehicle for testing of the developed algorithms, but most of the apparatuses and systems mounted to the vehicle are expensive, and there is a problem of space limitation for testing on actual road.

Accordingly, it is necessary to develop a system capable of precisely testing an autonomous vehicle in a virtual environment.

**SUMMARY**

An object of the present disclosure is to provide a virtual autonomous vehicle driving in a virtual environment with a test environment that is close to the actual driving environment.

Another object of the present disclosure is to provide a test environment in which it is possible to process LiDAR data acquired from driving in a real environment to generate virtual LiDAR data in a virtual environment.

The technical problems to be achieved in the present disclosure are not limited to those described above, and other technical problems that are not mentioned herein will be clearly understood by those skilled in the art to which the present disclosure belongs from the following description.

An apparatus for generating virtual LiDAR data is provided, which may include a LiDAR data collection unit installed in a moving means driving in a real environment to collect LiDAR data, a database configured to store the collected LiDAR data, a virtual environment build engine configured to build a virtual environment, and a LiDAR data generation unit configured to generate virtual LiDAR data corresponding to a movement of a virtual moving means in the built virtual environment.

The LiDAR data collection unit may include a laser light emitting unit and a laser light receiving unit, and the collected LiDAR data may include intensity information of the laser that is emitted through the laser light emitting unit and reflected off from an object.

The intensity information may be stored in association with corresponding coordinate information of a point where the laser is reflected.

The apparatus for generating virtual LiDAR data is provided, which may further include a point cloud map production unit configured to produce a point cloud map based on the collected LiDAR data.

The point cloud map may be data in which the collected LiDAR data is stored in association with corresponding coordinates on the built virtual environment.

The apparatus for generating virtual LiDAR data may further include a mesh conversion unit configured to convert the point cloud map into a 3D mesh map.

The LiDAR data generation unit may be configured to emit a virtual laser to a predetermined mesh of the converted 3D mesh, and calculate a virtual intensity of a laser reflected by the emitted virtual laser and generate the virtual LiDAR data.

The virtual intensity may be calculated based on intensity information of a plurality of coordinates forming the predetermined mesh.

The virtual intensity may be calculated as an average of the intensity information for the plurality of coordinates.

According to another aspect of the present disclosure, there is provided a method for controlling an apparatus for generating virtual LiDAR data in a virtual environment, in which the method may include by a LiDAR data collection unit installed in a moving means driving in a real environment, collecting LiDAR data, by a database, storing the collected LiDAR data, by a virtual environment build engine, building a virtual environment, and by a LiDAR data generation unit, generating virtual LiDAR data corresponding to a movement of a virtual moving means on the built virtual environment.

The LiDAR data collection unit may include a laser light emitting unit and a laser light receiving unit, and the collected LiDAR data may include intensity information of the laser that is emitted through the laser light emitting unit and reflected off from an object.

The intensity information may be stored in association with corresponding coordinate information of a point where the laser is reflected.

The method may further include, by a point cloud map production unit, producing the point cloud map based on the collected LiDAR data.

The point cloud map may be data in which the collected LiDAR data is stored in association with corresponding coordinates on the built virtual environment.

The method may further include, by a mesh conversion unit, converting the point cloud map into a 3D mesh map.

The generating the virtual LiDAR data may include by the LiDAR data generation unit, emitting a virtual laser to a predetermined mesh of the converted 3D mesh, and calculating a virtual intensity of a laser reflected by the emitted virtual laser and generating the virtual LiDAR data.

The virtual intensity may be calculated based on intensity information of a plurality of coordinates forming the predetermined mesh.

The virtual intensity may be calculated as an average of the intensity information for the plurality of coordinates.

The effects of the apparatus for generating virtual LiDAR data and a method for controlling the same according to the present disclosure will be described below.

According to at least one of the examples of the present disclosure, there is an advantage in that a test environment close to actual driving environment can be provided in a virtual environment.

In addition, according to at least one of the examples of the present disclosure, there is an advantage in that virtual LiDAR data for testing an autonomous vehicle in a virtual environment can be generated.

Further scope of applicability of the present disclosure will be apparent from the following detailed description. However, it should be understood that the detailed description and specific examples such as preferred examples of the present disclosure are given by way of illustration only, since various changes and modifications within the spirit and scope of the present disclosure may be clearly understood by those skilled in the art.

**BRIEF DESCRIPTION OF THE DRAWINGS**

FIG. 1 is a diagram illustrating a conceptual view of an apparatus 100 for generating LiDAR data.
FIG. 2 is a diagram illustrating dimensions of a point.
FIG. 3 is a flowchart illustrating a method for controlling the apparatus 100 for generating virtual LiDAR data.
FIG. 4 is a diagram illustrating a conceptual view of a 3D mesh map conversion.
FIG. 5 illustrates an example of converting a point cloud map into a 3D mesh map.
FIG. 6 illustrates a conceptual view of determining an intensity of a mesh.
FIG. 7 illustrates a screen applying the intensity obtained based on LiDAR data generated according to an example of the present disclosure.
FIG. 8 is a diagram schematically illustrating LiDAR data generated according to an example of the present disclosure.

**DETAILED DESCRIPTION**

Hereinafter, certain examples will be described herein in detail with reference to the accompanying drawings, but the same or similar components will be assigned the same reference numbers irrespective of the reference numerals in the drawings, and redundant description thereof will be omitted. The term "module" and "unit" used in the names of the components as used in the description are given only in consideration of the ease of writing the description, and not intended to have distinct meanings or roles by themselves. In addition, in describing certain examples, if it is determined that detailed description of related known technologies may obscure the gist of the examples disclosed herein, the detailed description thereof will be omitted. In addition, it should be understood that the accompanying drawings are only for the purpose of facilitating understanding of the examples disclosed in description, and the technical idea disclosed in the description is not limited by the accompanying drawings and includes all modifications, equivalents and substitutes included in the spirit and scope of the present disclosure.

The expressions including ordinal numbers such as "first," "second," and so on may be used for describing a variety of elements, although these elements are not limited by those expressions. The expressions are used only for the purpose of distinguishing one element from another.

It should be understood that when an element is referred to as being "connected" or "coupled" to another element, it may be directly connected or coupled to another element, with or without yet another element being present in between. On the other hand, it should be understood that when an element is referred to as being "directly connected" or "directly coupled" to another element, there are no other element present in between.

Unless otherwise specified, a singular expression includes a plural expression.

The term "comprise" or "have" as used herein is intended to designate an existence of features, numbers, steps, operations, elements, components or a combination of these, and accordingly, this should not be understood as precluding an existence or a possibility of adding one or more of other features, numbers, steps, operations, elements, components or a combination of these.

The LiDAR data mainly includes a distance and an intensity. In this case, the distance refers to a distance to the surface of an object that the laser emitted from the center of the LiDAR first hits, and the intensity (reflectance) refers to an intensity of the laser that is reflected off from the surface of the object and returns to a light receiving unit of the LiDAR.

At this time, the intensity may be basically determined by the color and material of the surface of the reflection point, and the intensity of the laser emitted from the light emitting unit of the LiDAR also depends on the manufacturer.

In general, the brighter the color of the reflection point, the higher the intensity, and the darker the color, the lower the intensity. In addition, the smoother the surface of the reflection point, the better the reflection and the higher the intensity, and the rougher the surface of the reflection point, the lower the intensity.

For example, the intensity is relatively high for the lane portion of the road that is relatively bright and has a relatively smooth surface because of the paint applied, while for the asphalt part with a rather rough surface and dark color, the intensity is low and it tends to be dark.

Accordingly, it is not easy to virtually generate LiDAR data that is affected by various environment variables. That is, a large amount of computation is required in order to reflect all the various environmental variables, and it is not suitable to generate virtual LiDAR data in real time.

Accordingly, the present disclosure proposes a method for effectively processing LiDAR data obtained through a moving means in a real environment and providing the processed result as virtual LiDAR data in a virtual environment for autonomous driving simulation.

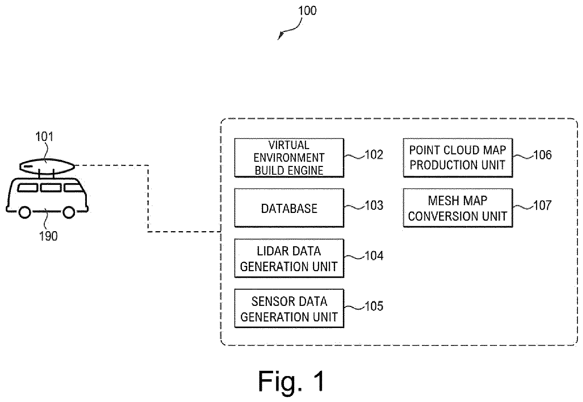

FIG. 1 is a diagram illustrating a conceptual view of an apparatus 100 for generating LiDAR data.

The apparatus 100 for generating LiDAR data is configured to include at least one of a LiDAR data collection unit 101, a virtual environment build engine 102, a database 103, a LiDAR data generation unit 104, a sensor data generation unit 105, a point cloud map production unit 106, and a mesh map conversion unit 107.

The components illustrated in FIG. 1 are not essentially required for implementing the apparatus 100 for generating LiDAR data, and accordingly, the apparatus 100 for generating LiDAR data described herein may have more or fewer components than those listed above.

The LiDAR data collection unit 101 is configured to be installed in the moving means 190 driving in the real environment to collect LiDAR data. The LiDAR data collection unit 101 may include a separate storage and store the collected LiDAR data. Alternatively, a wired or wireless communication unit may be provided and the collected data may be provided to the database 103 through wired or wireless communication.

The LiDAR data collection unit 101 may be the same as the LiDAR device installed in the actual autonomous vehicle. That is, an aspect of the present disclosure is to utilize the LiDAR data collected through a general LiDAR device and use the same in a virtual environment.

The database 103 is a configuration for storing the collected LiDAR data. As described below, the LiDAR data may be processed for use in a virtual environment, and the database 103 may store both the LiDAR data before and after processing.

The database 103 may further store at least a piece of environment information for building a virtual environment. The environment information may include at least one of simulated road information, surrounding vehicle information, surrounding pedestrian information, surrounding obstacle information, surrounding traffic light information, surrounding road signage information, event information, road information, surrounding vehicle information, surrounding pedestrian information, surrounding obstacle information, surrounding traffic light information, surrounding road signage information, and event information.

EP 4 209 807 A1

The virtual environment build engine 102 builds a virtual environment for autonomous driving simulation.

The virtual environment build engine 102 is equipped with a physical engine-based simulator to enable verification of algorithms for the autonomous vehicle. In addition, data such as topographic features, road types, pedestrians, autonomous vehicles, weather, and the like may be implemented in the built virtual environment, and event information data such as rockfalls, traffic accidents, and the like may also be provided such that it can occur.

In addition, a plurality of different vehicle data may be implemented on the virtual environment, and driving routes of some other vehicles may be changed according to the surrounding environment according to an input driving algorithm. In addition, some other vehicles may be configured to verify the driving algorithm according to a predetermined driving route.

The virtual environment build engine 102 may further include an output device connected to the simulator, and the data described above may be visualized on the output device such that the user can check the data as an image.

The LiDAR data generation unit 104 generates virtual LiDAR data corresponding to the movement of the virtual moving means in the built virtual environment. In other words, the LiDAR data generation unit 104 generates virtual LiDAR data that is close to the data of the autonomous vehicle moving in a real environment.

The sensor data generation unit 105 generates virtual sensor data by a virtual sensor provided in the virtual moving means on the built virtual environment. The sensor unit may include at least one of a LiDAR, a RADAR, a GPS, and a camera of the autonomous vehicle simulated in the virtual environment.

The point cloud map production unit 106 generates a point cloud map based on the collected LiDAR data. The point cloud map refers to data in which the collected LiDAR data is stored in association with corresponding coordinates on the built virtual environment.

The mesh map conversion unit 107 converts the point cloud map into a 3D mesh map. By connecting a plurality of points forming the point cloud map, a 3D mesh map formed of a plurality of meshes is formed.

The point cloud map production unit 106 records, based on the collected LiDAR data, the time for a laser to be sent to the object and return, and calculates the distance to the reflection point and generates a point for the reflection point. The generated point is formed of coordinate (position) information formed of 3D coordinates in a 3D space. The arrangement of a set of points generated as described above on the 3D space of the virtual environment is referred to as a point cloud map.

It is proposed such that each point forming the point cloud map does not simply include only coordinate information, but further includes an intensity at the corresponding coordinate.

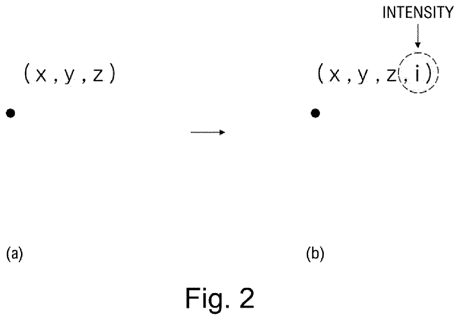

FIG. 2 is a diagram illustrating dimensions of a point.

FIG. 2A illustrates the coordinate information of the existing point, and FIG. 2B illustrates the information of the point added with the intensity information according to an example of the present disclosure.

While the existing point includes only 3D coordinate information, an example of the present disclosure proposes to add information on intensity such that each point has 4D coordinate information.

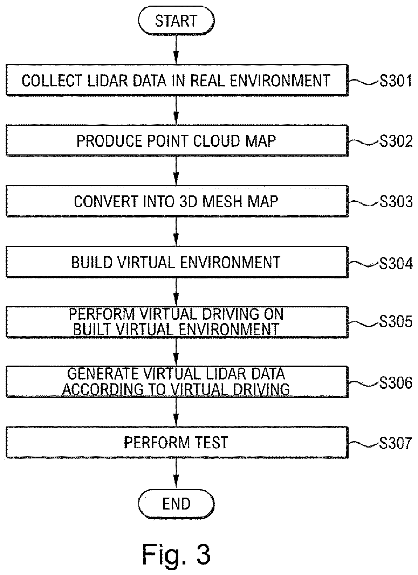

Hereinafter, a method for controlling the apparatus 100 for generating virtual LiDAR data will be described with reference to FIG. 3.

FIG. 3 is a flowchart illustrating a method for controlling the apparatus 100 for generating virtual LiDAR data.

At S301, the LiDAR data collection unit 101 collects LiDAR data while driving in a real environment. When collecting LiDAR data, it is apparent that GPS location information can be collected together.

The LiDAR data collection unit 101 may include a laser light emitting unit and a laser light receiving unit, and the collected LiDAR data may include intensity information of the laser that is emitted through the laser light emitting unit and reflected off from an object.

At S302, the point cloud map production unit 106 may produce a point cloud map based on the collected LiDAR data.

At S303, the mesh map conversion unit 107 converts the point cloud map into a 3D mesh map.

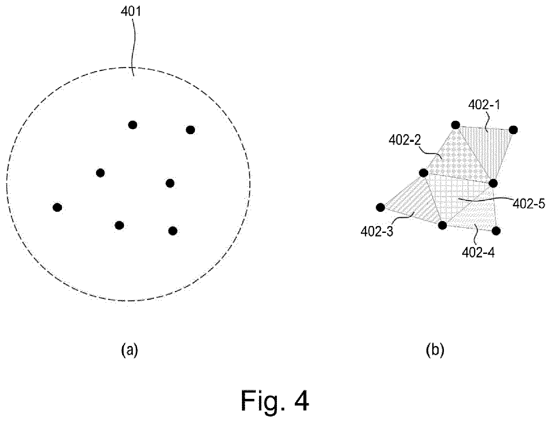

FIG. 4 is a diagram illustrating a conceptual view of a 3D mesh map conversion.

Referring to FIG. 4A, a plurality of points in the point cloud map are illustrated. In addition, as described above, each point stores 4D information that includes the 3D coordinate information together with the intensity. As illustrated in FIG. 4B, the mesh map conversion unit 107 may generate a 3D mesh map with a method of repeatedly generating triangular meshes 402-1 to 402-5 having three adjacent points as one plane.

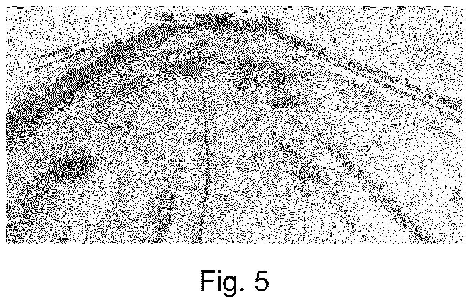

FIG. 5 illustrates an example of converting a point cloud map into a 3D mesh map.

Referring to the drawing, the points that formed the point cloud map are now forming a 3D mesh map through a combination of triangular meshes shared with each other.

Returning to FIG. 3, at S304, the virtual environment build engine 102 builds a virtual environment for the autonomous driving simulation. At S305, the virtual environment build engine 102 performs virtual driving of the autonomous vehicle on the built virtual environment.

The virtual environment built at S304 may be mapped with the 3D mesh map illustrated in FIG. 5.

At S306, the LiDAR data generation unit 104 generates virtual LiDAR data that is generated as the autonomous vehicle is driving in the virtual environment. The virtual LiDAR data generated in this way may be used to verify or test the algorithm for the vehicle, at S307.

To this end, the LiDAR data generation unit 104 emits a virtual laser onto the 3D mesh map in the virtual environment. In addition, if the emitted virtual laser is reflected off from a predetermined mesh, the intensity of the corresponding mesh is read and assumed to be the intensity of the reflected laser, and the LiDAR data is generated accordingly.

That is, the LiDAR data is generated by directly setting the intensity of the mesh to the intensity of the reflected laser, without considering the surface properties or color of the reflection point in the real virtual environment.

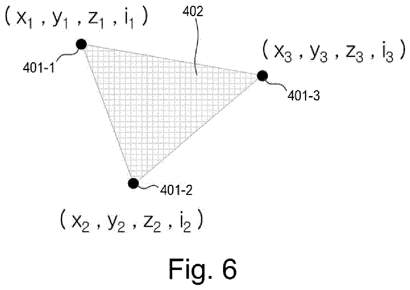

Hereinafter, a method for determining the intensity of the mesh will be described with reference to FIG. 6.

FIG. 6 illustrates a conceptual view of determining an intensity of a mesh.

As described above, a mesh 402 refers to a triangle having three points 401-1 to 401-3 as one plane. The three points are positioned at each vertex of the triangle.

Each of the first to third points 401-1 to 401-3 includes 4D information. As described above, the 4D information is information including the 3D position information (x, y, z) together with the intensity (i).

It is proposed to calculate the intensity of the mesh 402 based on the intensities i1 to i3 of the first to third points 401-1 to 401-3 in the mesh.

In order to convert the point cloud map into a 3D mesh map, the mesh map conversion unit 107 may set the average of the intensities i1 to i3 of the first to third points 401-1 to 401-3 as an intensity mesh ($i_{mesh}$) of the mesh 402. When represented by a mathematical expression, the intensity mesh ($i_{mesh}$) may be represented as Equation 1 below.

<Equation 1>

$$i_{mesh} = \frac{i_1 + i_2 + i_3}{3}$$

Meanwhile, the present disclosure is not limited to the method of Equation 1 above, and may include all methods of using at least one of the first to third points 401-1 to 401-3. For example, a maximum or minimum value may be used for the intensities i1 to i3 of the first to third points 401-1 to 401-3, or a geometric mean rather than an arithmetic mean may be used.

That is, each mesh converted by the mesh map conversion unit 107 will have its own preset intensity. The LiDAR data generation unit 104 may emit a virtual laser onto a 3D mesh map in a virtual environment, and generate LiDAR data with the intensity that is set for the mesh at a point where the intensity of the reflected virtual laser is reflected.

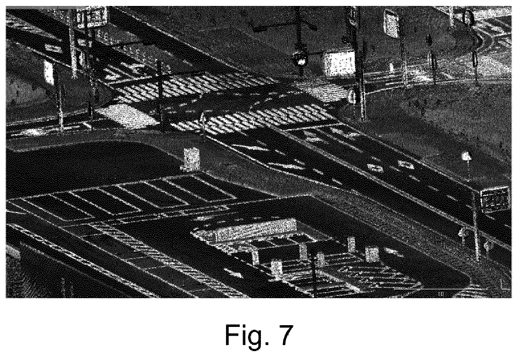

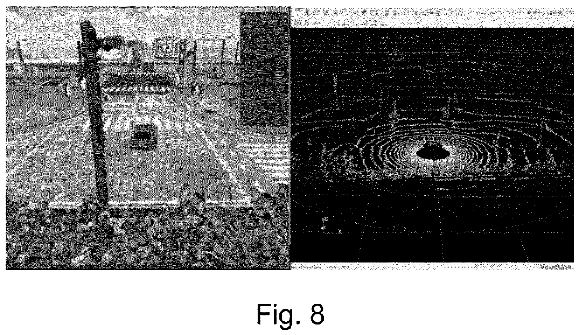

FIG. 7 illustrates a screen applying the intensity obtained based on LiDAR data generated according to an example of the present disclosure. FIG. 8 is a diagram schematically illustrating LiDAR data generated according to an example of the present disclosure.

Referring to the screens illustrated in FIGS. 7 and 8, it can be seen that both the intensity of the reflected laser by the paint applied on the crosswalk and the intensity of the laser reflected by the road signage are effectively reflected.

The aspects of the virtual LiDAR data generating apparatus and the method for controlling the same according to the present disclosure have been described above, but these are described as at least one example, and the technical spirit of the present disclosure and configuration and operation thereof are not limited by this example, and the scope of the technical spirit of the present disclosure is not restricted/limited by the drawings or the description with reference to the drawings. In addition, the concepts and examples of the present disclosure presented in the present disclosure can be used by those of ordinary skill in the art as a basis for modifying or designing other structures in order to perform the same purpose of the present disclosure, and the modified or changed equivalent structures by those of ordinary skill in the art to which the present disclosure pertains belong to the technical scope of the present disclosure described in the claims, such that various changes, substitutions and changes are possible without departing from the spirit or scope of the disclosure described in the claims.

**Claims**

1.   An apparatus for generating virtual LiDAR data on a virtual environment, comprising:

a LiDAR data collection unit installed in a moving means driving in a real environment to collect LiDAR data;
a database configured to store the collected LiDAR data;
a virtual environment build engine configured to build a virtual environment; and
a LiDAR data generation unit configured to generate virtual LiDAR data corresponding to a movement of a virtual moving means in the built virtual environment.

2. The apparatus according to claim 1, wherein the LiDAR data collection unit includes a laser light emitting unit and a laser light receiving unit, and
the collected LiDAR data includes intensity information of a laser that is emitted through the laser light emitting unit and reflected off from an object.

3. The apparatus according to claim 2, wherein the intensity information is stored in association with corresponding coordinate information of a point where the laser is reflected.

4. The apparatus according to claim 3, further comprising a point cloud map production unit configured to produce a point cloud map based on the collected LiDAR data.

5. The apparatus according to claim 4, wherein the point cloud map is data in which the collected LiDAR data is stored in association with corresponding coordinates on the virtual environment.

6. The apparatus according to claim 5, wherein a mesh conversion unit configured to convert the point cloud map into a 3D mesh map.

7. The apparatus according to claim 6, wherein the LiDAR data generation unit is configured to emit a virtual laser to a predetermined mesh of the converted 3D mesh map, and calculate a virtual intensity of a laser reflected by the emitted virtual laser and generate the virtual LiDAR data.

8. The apparatus according to claim 7, wherein the virtual intensity is calculated based on intensity information of a plurality of coordinates forming the predetermined mesh.

9. The apparatus according to claim 8, wherein the virtual intensity is calculated as an average of the intensity information for the plurality of coordinates.

10. A method for controlling an apparatus for generating virtual LiDAR data in a virtual environment, the method comprising:

   by a LiDAR data collection unit installed in a moving means driving in a real environment, collecting LiDAR data;
   by a database, storing the collected LiDAR data;
   by a virtual environment build engine, building a virtual environment; and
   by a LiDAR data generation unit, generating virtual LiDAR data corresponding to a movement of a virtual moving means on the built virtual environment.

11. The method according to claim 10, wherein the LiDAR data collection unit includes a laser light emitting unit and a laser light receiving unit, and
the collected LiDAR data includes intensity information of a laser that is emitted through the laser light emitting unit and reflected off from an object.

12. The method according to claim 11, wherein the intensity information is stored in association with corresponding coordinate information of a point where the laser is reflected.

13. The method according to claim 12, further comprising, by a point cloud map production unit, producing the point cloud map based on the collected LiDAR data.

14. The method according to claim 13, wherein the point cloud map is data in which the collected LiDAR data is stored in association with corresponding coordinates on the virtual environment.

15. The method according to claim 14, further comprising, by a mesh conversion unit, converting the point cloud map into a 3D mesh map.

16. The method according to claim 15, wherein the generating the virtual LiDAR data includes emitting a virtual laser to a predetermined mesh of the converted 3D mesh map, and calculating a virtual intensity of a laser reflected by the emitted virtual laser and generating the virtual LiDAR data.

17. The method according to claim 16, wherein the virtual intensity is calculated based on intensity information of a plurality of coordinates forming the predetermined mesh.

18. The method according to claim 17, wherein the virtual intensity is calculated as an average of the intensity information for the plurality of coordinates.

100

101

190

| VIRTUAL ENVIRONMENT BUILD ENGINE | ~102 |
| DATABASE | ~103 |
| LIDAR DATA GENERATION UNIT | ~104 |
| SENSOR DATA GENERATION UNIT | ~105 |

| POINT CLOUD MAP PRODUCTION UNIT | ~106 |
| MESH MAP CONVERSION UNIT | ~107 |

# Fig. 1

$(x,y,z)$

$(x,y,z,i)$

INTENSITY

(a)

(b)

Fig. 2

START

COLLECT LIDAR DATA IN REAL ENVIRONMENT — S301

PRODUCE POINT CLOUD MAP — S302

CONVERT INTO 3D MESH MAP — S303

BUILD VIRTUAL ENVIRONMENT — S304

PERFORM VIRTUAL DRIVING ON
BUILT VIRTUAL ENVIRONMENT — S305

GENERATE VIRTUAL LIDAR DATA
ACCORDING TO VIRTUAL DRIVING — S306

PERFORM TEST — S307

END

Fig. 3

401

402-1

402-2

402-5

402-3

402-4

(a)

(b)

Fig. 4

Fig. 5

$( x_1 , y_1 , z_1 , i_1 )$    402

$( x_3 , y_3 , z_3 , i_3 )$

401-1

401-3

401-2

$( x_2 , y_2 , z_2 , i_2 )$

Fig. 6

Fig. 7

Fig. 8

## INTERNATIONAL SEARCH REPORT

| | International application No. |
|---|---|
| | **PCT/KR2022/005161** |

### A. CLASSIFICATION OF SUBJECT MATTER

**G01S 17/894**(2020.01)i; **G01S 17/931**(2020.01)i; **G01S 7/48**(2006.01)i; **G05D 1/02**(2006.01)i

According to International Patent Classification (IPC) or to both national classification and IPC

### B. FIELDS SEARCHED

Minimum documentation searched (classification system followed by classification symbols)

G01S 17/894(2020.01); G01S 13/42(2006.01); G01S 17/88(2006.01); G01S 17/89(2006.01); G01S 17/93(2006.01); G05D 1/00(2006.01); G05D 1/02(2006.01); G06T 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이다(LIDAR), 가상 환경(virtual environment), 3차원(three dimensional), 메쉬 맵(mesh map), 자율 주행(autonomous driving)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0042781 A (SK TELECOM CO., LTD.) 24 April 2020 (2020-04-24)<br>See paragraphs [0017]-[0020] and figure 1. | 1-18 |
| Y | KR 10-1572618 B1 (INDUSTRY-ACADEMIC COOPERATION FOUNDATION, YONSEI UNIVERSITY) 02 December 2015 (2015-12-02)<br>See paragraphs [0015] and [0039]-[0078] and figures 1-5. | 1-18 |
| Y | JP 2006-194617 A (ISHIKAWAJIMA HARIMA HEAVY IND CO., LTD.) 27 July 2006 (2006-07-27)<br>See paragraphs [0018]-[0021] and figures 1-2. | 2-9,11-18 |
| A | JP 2019-533133 A (BEIJING DIDI INFINITY TECHNOLOGY AND DEVELOPMENT CO., LTD.) 14 November 2019 (2019-11-14)<br>See paragraphs [0048]-[0058] and figure 3. | 1-18 |
| A | KR 10-1984762 B1 (MORAI INC.) 03 June 2019 (2019-06-03)<br>See claim 1 and figures 1-5. | 1-18 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 February 2023** | **02 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

| International application No. |
| --- |
| **PCT/KR2022/005161** |

| Patent document cited in search report | | | Publication date (day/month/year) | Patent family member(s) | | | Publication date (day/month/year) |
| --- | --- | --- | --- | --- | --- | --- | --- |
| KR | 10-2020-0042781 | A | 24 April 2020 | KR | 10-2163389 | B1 | 08 October 2020 |
| KR | 10-1572618 | B1 | 02 December 2015 | None | | | |
| JP | 2006-194617 | A | 27 July 2006 | JP | 4069926 | B2 | 02 April 2008 |
| JP | 2019-533133 | A | 14 November 2019 | AU | 2017-417170 | A1 | 14 March 2019 |
| | | | | CA | 3026667 | A1 | 31 January 2019 |
| | | | | CA | 3026667 | C | 15 September 2020 |
| | | | | CN | 109716160 | A | 03 May 2019 |
| | | | | EP | 3465267 | A1 | 10 April 2019 |
| | | | | JP | 6689006 | B2 | 28 April 2020 |
| | | | | SG | 11201810922 | A | 28 March 2019 |
| | | | | TW | 201920982 | A | 01 June 2019 |
| | | | | TW | I691730 | B | 21 April 2020 |
| | | | | US | 10824880 | B2 | 03 November 2020 |
| | | | | US | 2019-0138822 | A1 | 09 May 2019 |
| | | | | WO | 2019-037129 | A1 | 28 February 2019 |
| KR | 10-1984762 | B1 | 03 June 2019 | CN | 113287073 | A | 20 August 2021 |
| | | | | EP | 3816750 | A1 | 05 May 2021 |
| | | | | IL | 282782 | A | 30 June 2021 |
| | | | | JP | 2022-506797 | A | 17 January 2022 |
| | | | | SG | 11202104425 | A | 28 May 2021 |
| | | | | US | 2021-0141978 | A1 | 13 May 2021 |
| | | | | WO | 2020-091421 | A1 | 07 May 2020 |

Form PCT/ISA/210 (patent family annex) (July 2019)